# FASCICULE DE BREVET EUROPEEN

(11) **EP 0 966 112 B1**
(45) Date de publication et mention de la délivrance du brevet: **21.11.2001**
(21) Numéro de dépôt: 99111698.9
(22) Date de dépôt: 17.06.1999
(51) Int. Cl.: H04B 5/00, G06K 19/00

(54) **Procédé et système de détection par couplage inductif d'un signal de modulation de charge**
Verfahren und System zur Detektion eines Belastungsmodulationssignals durch induktive Kopplung
Method and system for inductive coupling detection of a charge modulation signal

(30) Priorité: 18.06.1998 FR 9807678
(43) Date de publication de la demande: 22.12.1999
(73) Titulaire: STMicroelectronics S.A., 94250 Gentilly (FR)
(72) Inventeur: Enguent, Jean-Pierre, 83000 Toulon (FR)
(74) Mandataire: Ballot, Paul Denis Jacques

(56) Documents cités:
- EP-A- 0 492 569
- EP-A- 0 704 928
- US-A- 4 928 087

## Description

La présente invention concerne un procédé et un système de détection par couplage inductif d'un signal de modulation de charge émis par un système de modulation de charge.

La présente invention concerne notamment la réception de données binaires émises par un circuit intégré fonctionnant sans contact, par exemple un circuit intégré présent dans une carte à puce sans contact, une étiquette électronique, un jeton électronique...

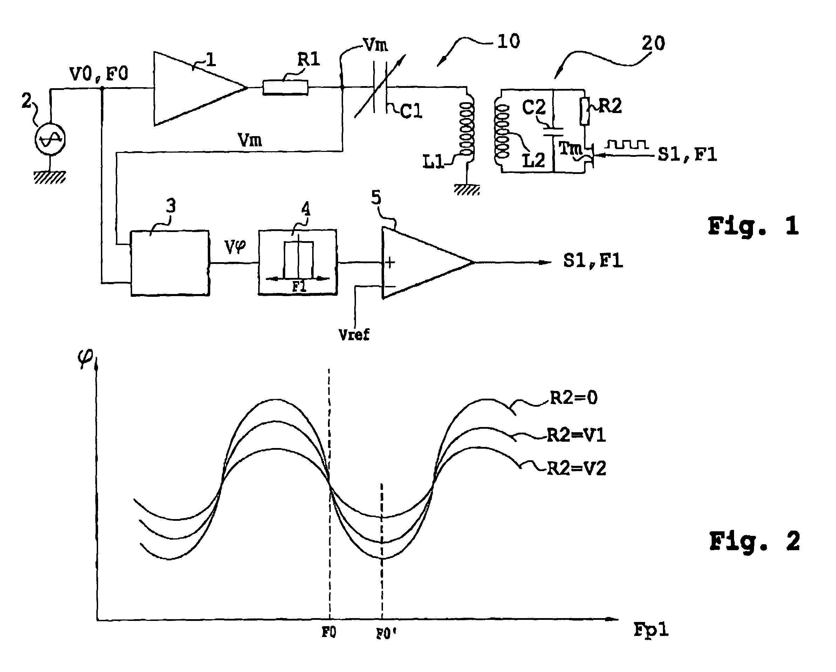

A titre d'exemple, la figure 1 représente le schéma électrique classique d'un système de détection 10 et d'un système de modulation de charge 20 coopérant par couplage inductif.

Le système 10 comprend une capacité ajustable C1 et bobine L1 en série formant un circuit résonant. La capacité C1 est connectée par l'intermédiaire d'une résistance R1 à la sortie d'un amplificateur tension/courant 1 recevant en entrée une tension alternative V0 de fréquence F0, délivrée par un oscillateur 2. La tension V0, convertie en courant par l'amplificateur 1, forme le signal d'excitation du circuit résonant L1C1 dont la fréquence propre Fpl est réglée au voisinage de la fréquence d'excitation F0.

En regard du système de détection 10, le système de modulation de charge 20 comprend une bobine d'antenne L2 formant avec une capacité C2 un circuit résonnant de fréquence propre Fp2 accordée à la fréquence F0. La bobine L2 est connectée en parallèle avec des moyens de modulation de charge, ici une résistance R2 en série avec un interrupteur Tm. L'interrupteur Tm est piloté par un signal S1 de type binaire, de fréquence porteuse F1, devant être détecté par le système 10. Les modulations de charge appliquées à la bobine L2 en fonction des fluctuations du signal S1 se répercutent par couplage inductif sur la bobine L1, et l'on observe aux bornes du circuit d'antenne L1C1 une tension alternative Vm de fréquence F0, modulée en amplitude et en phase.

Selon une première méthode classique illustrée sur la figure 1, la détection du signal de modulation de charge S1 est assurée par un comparateur de phase 3 recevant en entrée les tensions V0 et Vm. Le comparateur 3 délivre une tension Vϕ proportionnelle au déphasage de ces deux signaux. La tension Vϕ est filtrée par un passe-bande 4 calé sur la fréquence porteuse F1 du signal S1. La sortie du passe-bande 4 est rendue binaire par un comparateur 5 à seuil Vref. A la sortie du comparateur 5, on trouve le signal S1 de fréquence F1.

Cette méthode de détection du signal S1 par comparaison de phase présente l'avantage d'offrir un bon rapport signal sur bruit mais nécessite que la fréquence propre Fp1 du circuit d'antenne L1C1 soit sensiblement désaccordée vis-à-vis de la fréquence F0. En effet, il apparaît en pratique que la phase ϕ de la tension Vm n'est pas sensible aux modulations de charge quand la fréquence propre Fp1 du circuit d'antenne L1C1 est rigoureusement égale à la fréquence d'excitation F0. Pour fixer les idées, on a représenté en figure 2 les courbes de phase ϕ de la tension Vm en fonction de la fréquence propre Fp1, pour diverses valeurs 0, v1, v2 de la résistance de charge R2. Quand Fp1 est égale à F0, on voit que les courbes de phase se croisent en un même point et que la sensibilité du système 30 aux modulations de charge est nulle. En calant la fréquence propre Fp1 du circuit L1C1 sur un point F0' voisin de F0, on obtient par contre une bonne sensibilité, la phase ϕ étant fonction de la charge R2.

En pratique, cela signifie que la fréquence propre Fp1 du circuit L1C1 doit être ajustée finement par un réglage de la capacité C1, et contrôlée régulièrement pour corriger les dérives de la capacité C1 dues aux conditions climatiques (température, humidité...) et au vieillissement. Cette contrainte rend la méthode impropre à être mise en oeuvre dans un système à maintenance réduite, par exemple un lecteur de carte à puce sans contact disposé dans un lieu public, une station de test automatique de circuits intégrés sans contact,...

Pour cette raison, on préfère généralement une seconde méthode classique, consistant à démoduler l'amplitude de la tension Vm aux bornes du circuit résonnant L1C1, pour en extraire le signal S1. Cette seconde méthode présente toutefois l'inconvénient d'offrir un rapport signal sur bruit médiocre.

Ainsi, un objectif de la présente invention est de prévoir un système et une méthode de détection de modulation de charge par comparaison de phase qui ne présente pas les inconvénients de la méthode décrite ci-dessus.

Selon l'invention cet objectif est atteint par un procédé de détection d'un signal de modulation de charge reçu par couplage inductif dans un circuit d'antenne comportant une bobine de détection excitée par un signal de fréquence prédéterminée, comprenant une étape de comparaison de la phase du signal d'excitation de la bobine avec la phase d'un signal prélevé dans le circuit d'antenne, procédé dans lequel le circuit d'antenne ne forme pas un circuit résonant au voisinage de la fréquence du signal d'excitation, et l'on compare la phase du signal d'excitation avec la phase du courant traversant la bobine de détection.

Selon un mode de réalisation appliqué à la détection d'un signal de modulation de charge émis par un circuit intégré comportant des moyens pour moduler la charge d'une bobine, la bobine de détection et la bobine du circuit intégré sont respectivement formées par des enroulements primaire et secondaire d'un transformateur, l'enroulement secondaire étant connecté à des plots du circuit intégré.

La présente invention concerne également un système de détection par couplage inductif d'un signal de modulation de charge, comprenant un circuit d'antenne comportant une bobine, des moyens pour appliquer au circuit d'antenne un signal d'excitation de fréquence prédéterminée, des moyens comparateurs de phase recevant sur une première entrée le signal d'excitation et sur une deuxième entrée un signal prélevé dans le circuit d'antenne, et des moyens pour extraire le signal de modulation de charge d'un signal de phase délivré par les moyens comparateurs, dans lequel : le circuit d'antenne ne forme pas un circuit résonant au voisinage de la fréquence du signal d'excitation, et les moyens comparateurs de phase reçoivent sur leur deuxième entrée un signal délivré par des moyens de détection du courant traversant la bobine.

Selon un mode de réalisation, les moyens de détection du courant comprennent un transformateur dont l'enroulement primaire est connecté en série avec la bobine d'antenne.

Selon un mode de réalisation, le secondaire du transformateur est connecté en parallèle avec une résistance, pour convertir en tension le courant traversant le primaire.

Selon un mode de réalisation, les moyens pour extraire le signal de modulation de charge comprennent un filtre passe-bande centré sur une fréquence porteuse du signal de modulation de charge.

La présente invention concerne également une station de réception de données par couplage inductif et modulation de charge, comprenant un système de détection selon l'invention pour détecter un signal de modulation de charge, et un circuit décodeur pour extraire des données du signal de modulation de charge.

La présente invention concerne également une station de test d'un circuit intégré fonctionnant sans contact au moyen d'une bobine d'antenne, comprenant un système de détection selon l'invention pour détecter un signal de modulation de charge émis par le circuit intégré.

Selon un mode de réalisation, la bobine du système de détection et la bobine du circuit intégré sont des enroulements primaire et secondaire d'un transformateur.

Selon un mode de réalisation, le station comprend un circuit décodeur pour extraire des données du signal de modulation de charge détecté.

Ces objets, caractéristiques et avantages de la présente invention seront exposés plus en détail dans la description suivante d'un exemple de réalisation d'un système de détection selon l'invention, en relation avec les figures jointes parmi lesquelles :
- la figure 1 précédemment décrite est le schéma électrique d'un système de détection classique d'un signal de modulation de charge,
- la figure 2 précédemment décrite représente, pour plusieurs valeurs de charge, des courbes de phase d'un signal d'antenne en fonction de la fréquence de résonance du circuit d'antenne du système de la figure 1,
- la figure 3 représente le schéma électrique d'un système de détection selon l'invention, et illustre par ailleurs une application de ce système à la réception de données transmises par un circuit intégré fonctionnant sans contact, et
- la figure 4 illustre une application du système de détection de la figure 3 au test de circuits intégrés fonctionnant sans contact, avant la connexion de ces circuits à une bobine d'antenne.

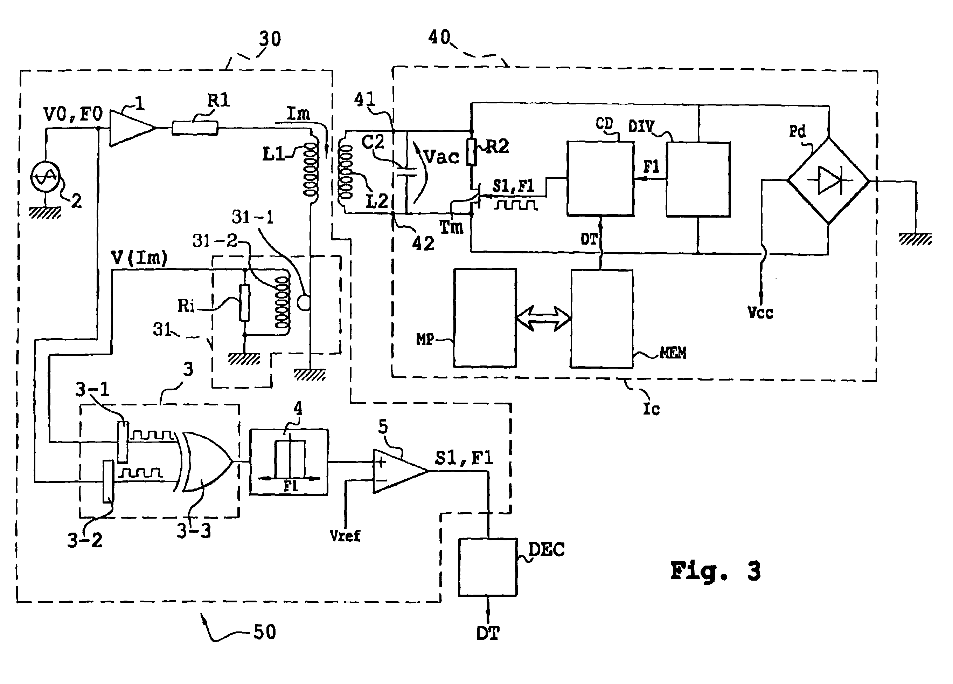

La figure 3 représente, dans sa partie gauche, un système 30 de détection selon l'invention d'un signal de modulation de charge. On retrouve dans le système 30 la plupart des éléments décrits au préambule, dont les références sont conservées, à l'exception de la capacité C1 qui est supprimée.

Selon l'invention, le système 30 diffère en effet de celui de la figure 1 par le fait que le circuit d'antenne, qui comprend ici uniquement la bobine L1, ne forme pas un circuit résonant au voisinage de la fréquence F0 du signal d'excitation V0.

Par ailleurs, le comparateur de phase 3 délivrant le signal de phase Vϕ reçoit en entrée le signal d'excitation V0 et un signal V(Im) qui est l'image du courant Im traversant la bobine L1. Le signal V(Im) est délivré par un capteur de courant 31 prenant ici la forme d'un transformateur ayant des enroulements primaire 31-1 et secondaire 31-2. L'enroulement primaire 31-1 ne comporte ici qu'une spire et est connecté en série avec la bobine L1. L'enroulement secondaire 31-2 est connecté en parallèle avec une résistance Ri de conversion courant/tension.

Enfin, le comparateur de phase 3 est réalisé de façon simple au moyen de deux circuits écrêteurs 3-1, 3-2 dont les sorties attaquent les entrées d'une porte logique 3-3 du type OU EXCLUSIF, le signal de phase Vϕ étant délivré par la porte 3-3. Comme précédemment, le comparateur de phase 3 est connecté à un filtre passe-bande 4 suivi d'un comparateur 5 à seuil Vref.

L'avantage du système 30 selon l'invention est qu'il ne nécessite aucun réglage de son circuit d'antenne tout en offrant une excellente sensibilité du signal de phase Vϕ aux modulations de charge. Ce résultat est obtenu par la combinaison des deux caractéristiques décrites plus haut, à savoir la prévision d'un circuit d'antenne non résonnant à la fréquence F0 et aux fréquences avoisinantes, et une comparaison de phase basée sur une détection du courant d'antenne Im.

La figure 3 illustre par ailleurs une application du système 30 à la réception de données émises par un circuit intégré IC fonctionnant sans contact, dont le schéma électrique est représenté sur la partie droite de la figure.

Le circuit IC est équipé de la bobine d'antenne L2, la capacité C2, la résistance R2 et l'interrupteur de modulation de charge Tm décrits au préambule. Aux bornes de la bobine L2, apparaît une tension induite alternative Vac de fréquence F0, image de la tension Vm présente aux bornes de la bobine L1.

Le circuit intégré IC comprend par ailleurs un circuit codeur CD, une mémoire de données MEM, un microprocesseur MP, un circuit diviseur de fréquence DIV et un pont à diodes Pd agencé pour redresser la tension Vac. Le circuit DIV délivre au circuit codeur CD un signal d'horloge extrait de la tension Vac, dont la fréquence F1 est un sous-multiple de la fréquence F0. Le circuit CD, par exemple un codeur BPSK par sauts de phase, reçoit des données numériques DT de la mémoire MEM et délivre le signal S1 de modulation de charge, de fréquence porteuse F1. Enfin, le redresseur Pd délivre une tension continue Vcc assurant l'alimentation électrique du circuit IC.

Ainsi, les données DT à émettre sont injectées sous forme codée dans le signal de modulation de charge S1. La sortie du système 30 est appliquée sur l'entrée d'un décodeur DEC qui démodule le signal S1 et en extrait les données numériques DT.

En pratique, le circuit intégré IC peut être agencé dans un support portable comme une carte plastique, un jeton, une étiquette... Le système de détection 30 forme ainsi, avec le décodeur DEC, une station 50 de réception de données, par exemple un lecteur de cartes à puce sans contact. La station 50 peut comprendre des moyens pour envoyer des données au circuit intégré IC, par exemple des moyens de modulation de l'amplitude du signal d'excitation V0. De tels moyens sont bien connus de l'homme de l'art et ne seront pas décrits ici dans un souci de simplicité.

A la lecture de ce qui précède, il apparaîtra clairement à l'homme de l'art que le système de détection selon l'invention est destiné à fonctionner avec un fort couplage inductif entre les bobines L1 et L2. La présente invention est ainsi réservée à des applications à faible distance de communication, par exemple aux lecteurs de cartes sans contact pourvus d'une fente d'introduction et d'un guide de carte. De tels lecteurs garantissent une faible distance de communication, de l'ordre de quelques millimètres.

La présente invention est également applicable à la réalisation d'une station de test permettant de tester un circuit intégré sans contact avant son assemblage sur un support et sa connexion à une bobine d'antenne. Selon un aspect de la présente invention, on propose de simuler la bobine d'antenne L2 du circuit intégré au moyen de l'enroulement secondaire d'un transformateur dont l'enroulement primaire forme la bobine L1 du système de détection 30.

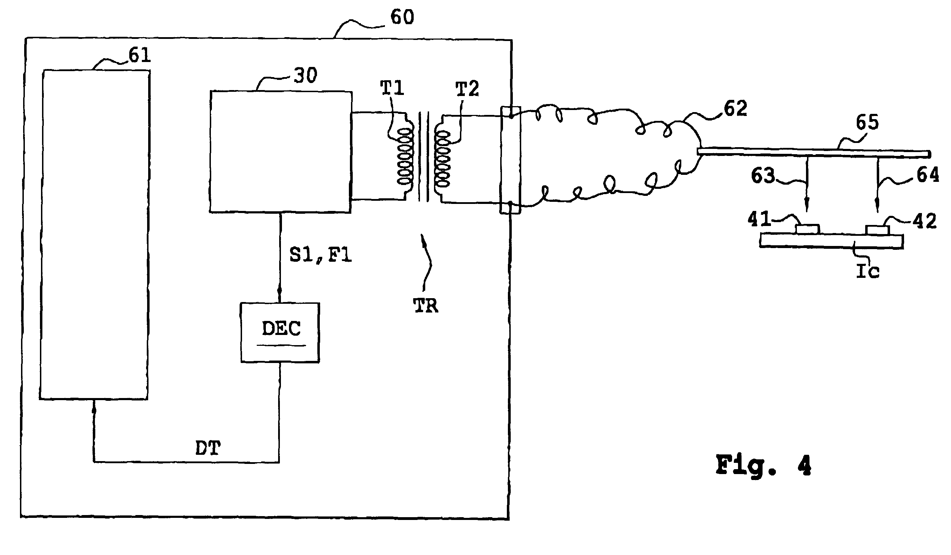

La figure 4 représente schématiquement une telle station de test 60. La station 60 comprend un transformateur TR, le système de détection 30 selon l'invention, le décodeur DEC déjà décrit et une unité centrale 61 recevant les données DT délivrées par le circuit DEC. L'enroulement primaire T1 du transformateur TR forme la bobine du système de détection 30. L'enroulement secondaire T2 est relié par l'intermédiaire de fils électriques 62 à des pointes métalliques 63,64 fixées sur une carte à circuit imprimé 65. Les pointes 63, 64 sont appliquées sur des plots 41, 42 du circuit intégré IC prévus pour être soudés à une bobine d'antenne. Ainsi, l'enroulement T2 forme une bobine d'antenne fictive permettant de faire fonctionner et de tester le circuit IC avant son montage sur support portable et sa connexion à une bobine d'antenne.

Cet aspect de l'invention garantit un fort couplage inductif entre les enroulements T1 et T2 et permet de réaliser une station de test à faible maintenance, ne nécessitant aucun réglage de son circuit d'antenne et pouvant être disposée dans une chaîne de fabrication de circuits intégrés. Les circuits intégrés peuvent être testés alors qu'ils sont encore présents collectivement sur une plaquette mère de silicium, ou "wafer", avant la découpe de la plaquette mère.

Il apparaîtra clairement à l'homme de l'art que la présente invention est susceptible de diverses autres applications et modes de réalisation. Notamment, si l'on se réfère à nouveau à la figure 3, il est bien évident que le capteur de courant 31 peut être réalisé de diverses manières, notamment au moyen d'une résistance de précision, d'un capteur à effet Hall,...

## Revendications

1. Système (30) de détection par couplage inductif d'un signal de modulation de charge (S1), comprenant :
- un circuit d'antenne comportant une bobine (L1, T1),
- des moyens (1, 2, R1) pour appliquer au circuit d'antenne un signal d'excitation (V0) de fréquence prédéterminée (F0),
- des moyens (3) comparateurs de phase recevant sur une première entrée le signal d'excitation (V0) et sur une deuxième entrée un signal prélevé dans le circuit d'antenne (L1), et
- des moyens (4, 5) pour extraire le signal de modulation de charge (S1) d'un signal de phase (Vϕ) délivré par les moyens comparateurs (3),
**caractérisé en ce que** :
- le circuit d'antenne (L1) ne forme pas un circuit résonant au voisinage de la fréquence du signal d'excitation,
- les moyens comparateurs de phase (3) reçoivent sur leur deuxième entrée un signal (V(Im)) délivré par des moyens (31) de détection du courant (Im) traversant la bobine (L1).

2. Système selon la revendication 1, **caractérisé en ce que** les moyens (31) de détection du courant (Im) comprennent un transformateur dont l'enroulement primaire (31-1) est connecté en série avec la bobine d'antenne (L1).

3. Système selon la revendication 2, dans lequel le secondaire (31-2) du transformateur est connecté en parallèle avec une résistance (Ri), pour convertir en tension le courant traversant le primaire (31-1).

4. Système selon l'une des revendications précédentes, dans lequel les moyens pour extraire le signal de modulation de charge comprennent un filtre passe-bande (4) centré sur une fréquence porteuse (F1) du signal de modulation de charge.

5. Station (50) de réception de données (DT) par couplage inductif et modulation de charge, **caractérisé en ce qu'**elle comprend un système de détection (30) selon l'une des revendications 1 à 4 pour détecter un signal de modulation de charge (S1), et un circuit décodeur (DEC) pour extraire des données (DT) du signal de modulation de charge (S1).

6. Station (60) de test d'un circuit intégré (IC) fonctionnant sans contact au moyen d'une bobine d'antenne (L2, T2), **caractérisée en ce qu'**elle comprend un système de détection (30) selon l'une des revendications 1 à 4 pour détecter un signal (S1) de modulation de charge émis par le circuit intégré (IC).

7. Station de test selon la revendication 6, dans laquelle la bobine (T1) du système de détection et la bobine (T2) du circuit intégré sont des enroulements primaire et secondaire d'un transformateur (TR).

8. Station de test selon l'une des revendications 6 et 7, comprenant un circuit décodeur (DEC) pour extraire des données (DT) du signal de modulation de charge détecté (S1).

9. Procédé de détection d'un signal de modulation de charge (S1) reçu par couplage inductif dans un circuit d'antenne comportant une bobine de détection (L1) excitée par un signal (V0) de fréquence prédéterminée (F0), comprenant une étape de comparaison de la phase du signal d'excitation (V0) de la bobine (L1, T1) avec la phase d'un signal prélevé dans le circuit d'antenne, **caractérisé en ce que** le circuit d'antenne (L1, T1) ne forme pas un circuit résonant au voisinage de la fréquence du signal d'excitation (F0), et **en ce que** l'on compare la phase du signal d'excitation (V0) avec la phase du courant (Im) traversant la bobine de détection (L1, T1).

10. Procédé selon la revendication 9, pour détecter un signal de modulation de charge (S1) émis par un circuit intégré (IC) comportant des moyens (R2, Tm, CD, DIV) pour moduler la charge d'une bobine (L2), **caractérisé en ce que** la bobine de détection (L1) et la bobine (L2) du circuit intégré sont respectivement formées par des enroulements primaire (T1) et secondaire (T2) d'un transformateur (TR), l'enroulement secondaire étant connecté à des plots (41, 42) du circuit intégré (IC).

## Claims

1. System (30) for detection by inductive coupling of a load modulation signal (S1), comprising:
- an antenna circuit comprising a coil (L1, T1),
- means (1, 2, R1) for applying an excitation signal (V0) of predetermined frequency (F0) to the antenna circuit,
- phase comparison means (3) receiving at a first input the excitation signal (V0) and at a second input a signal taken from the antenna circuit (L1), and
- means (4, 5) for extracting the load modulation signal (S1) from a phase signal (Vϕ) delivered by the comparison means (3),
**characterised in that**:
- the antenna circuit (L1) does not form a circuit which resonates in the vicinity of the frequency of the excitation signal,
- the phase comparison means (3) receive at their second input a signal (V(Im)) delivered by means (31) for detection of the current (Im) passing through the coil (L1).

2. System according to claim 1, **characterised in that** the means (31) for detection of the current (Im) comprise a transformer the primary winding (31-1) of which is connected in series with the antenna coil (L1).

3. System according to claim 2, in which the secondary (31-2) of the transformer is connected in parallel with a resistor (Ri) to convert the current passing through the primary (31-1) into voltage.

4. System according to one of the preceding claims, in which the means for extracting the load modulation signal comprise a band pass filter (4) centred on a carrier frequency (F1) of the load modulation signal.

5. Station (50) for reception of data (DT) by inductive coupling and load modulation, **characterised in that** it comprises a detection system (30) according to one of claims 1 to 4 for detecting a load modulation signal (S1), and a decoding circuit (DEC) for extracting data (DT) from the load modulation signal (S1).

6. Station (60) for testing an integrated circuit (IC) operating without contact by means of an antenna coil (L2, T2), **characterised in that** it comprises a detection system (30) according to one of claims 1 to 4 for detecting a load modulation signal (S1) transmitted by the integrated circuit (IC).

7. Testing station according to claim 6, in which the coil (T1) of the detection system and the coil (T2) of the integrated circuit are primary and secondary windings of a transformer (TR).

8. Testing station according to one of claims 6 and 7, comprising a decoding circuit (DEC) for extracting data (DT) from the load modulation signal (S1) detected.

9. Method for detection of a load modulation signal (S1) received by inductive coupling from an antenna circuit comprising a detection coil (L1) excited by a signal (V0) of predetermined frequency (F0), comprising a step during which the phase of the excitation signal (V0) of the coil (L1, T1) is compared with the phase of a signal taken from the antenna circuit, **characterised in that** the antenna circuit (L1, T1) does not form a circuit which resonates in the vicinity of the frequency of the excitation signal (F0), and **in that** the phase of the excitation signal (V0) is compared with the phase of the current (Im) passing through the detection coil (L1, T1).

10. Method according to claim 9, for detecting a load modulation signal (S1) transmitted by an integrated circuit (IC) comprising means (R2, Tm, CD, DIV) for modulating the load of a coil (L2), **characterised in that** the detection coil (L1) and the coil (L2) of the integrated circuit are respectively formed by the primary and secondary windings (T1 and T2) of a transformer (TR), the secondary winding being connected to contacts (41, 42) of the integrated circuit (IC).

## Patentansprüche

1. System (30) zum Erfassen eines Lastmodulationssignals (S1) durch induktive Kopplung mit:
- einem Antennenschaltkreis mit einer Spule (L1, T1)
- Vorrichtungen (1, 2, R1) zum Anlegen eines Erregersignals (V0) einer vorgegebenen Frequenz (F0) an den Antennenschaltkreis,
- Vergleichsvorrichtungen (3) für die Phase, an deren erstem Eingang das Erregersignal (V0) und an deren zweiten Eingang ein in dem Antennenschaltkreis (L1) abgegriffenes Signal anliegt, und
- Vorrichtungen (4, 5) zum Extrahieren des Lastmodulations-signals (S1) aus einem Phasensignal (Vϕ) das von den Vergleichsvorrichtungen (3) ausgegeben wird,
**dadurch gekennzeichnet, dass**:
- der Antennenschaltkreis (L1) keinen Schaltkreis bildet, der eine Resonanz in der Nähe der Frequenz des Erregersignals hat,
- die Vergleichsvorrichtungen für die Phase (3) über ihren zwei ten Eingang ein Signal (V(Im)) empfangen, das durch die Vorrichtungen (31) zum Erfassen des Stroms (Im), der durch die Spule (L1) fließt, ausgegeben wird.

2. System nach Anspruch 1, **dadurch gekennzeichnet, dass** die Vorrichtungen (31) zum Erfassen des Stroms (Im) einen Transformator umfassen, dessen Primärwicklung (31-1) in Reihe geschaltet ist mit der Antennenspule (L1).

3. System nach Anspruch 2, bei dem die Sekundärwicklung (31-2) des Transformators parallel zu einem Widerstand (Ri) geschaltet ist, um den Strom durch die Primärwicklung (31-1) in eine Spannung zu wandeln.

4. System nach einem der vorangehenden Ansprüche, bei dem die Vorrichtungen zum Extrahieren des Lastmodulationssignals ein Tiefpassfilter (4) umfassen, das auf einer Trägerfrequenz (F1) des Lastmodulationssignals zentriert ist.

5. Station (50) zum Empfangen von Daten (DT) über induktive Kopplung und zur Lastmodulation, **dadurch gekennzeichnet, dass** sie ein Erfassungssystem (30) nach einem der Ansprüche 1 bis 4 umfasst, um ein Lastmodulationssignal (S1) zu erfassen, und einen Dekodierschaltkreis (DEC) zum Extrahieren von Daten (DT) aus dem Lastmodulationssignal (S1).

6. Station (60) zum Testen eines integrierten Schaltkreises (IC), die kontaktlos über eine Antennenspule (L2, T2) arbeitet, **dadurch gekennzeichnet, dass** sie ein Erfassungssystem (30) nach einem der Ansprüche 1 bis 4 umfasst, um ein Lastmodulationssignal (S1) zu erfassen, das durch den integrierten Schaltkreis (IC) ausgegeben wird.

7. Teststation nach Anspruch 6, bei der die Spule (T1) des Erfassungssystems und die Spule (T2) des integrierten Schaltkreises die Primär- und Sekundärwicklung eines Transformators (TR) darstellen.

8. Teststation nach einem der Ansprüche 6 und 7 mit einem Dekodierschaltkreis (DEC) zum Extrahieren von Daten (DT) des erfassten Lastmodulationssignals (S1).

9. Verfahren zum Erfassen eines Lastmodulationssignals (S1), das durch induktive Kopplung in einem Antennenschaltkreis empfangen wurde, mit einer Erfassungsspule (L1), die durch ein Signal (V0) mit vorgegebener Frequenz (F0) erregt wird, mit einer Stufe für das Vergleichen der Phase des Erregersignals (V0) der Spule (L1, T1) mit der Phase eines in dem Antennenschaltkreis abgegriffenen Signals, **dadurch gekennzeichnet, dass** der Antennenschaltkreis (L1, T1) keinen Schaltkreis bildet, der eine Resonanz in der Nähe der Frequenz des Erregersignals (F0) aufweist, und dass die Phase des Erregersignals (V0) mit der Phase des Stroms (Im) verglichen wird, der durch die Erfassungsspule (L1, T1) fließt.

10. Verfahren nach Anspruch 9 zum Erfassen eines Lastmodulationssignals (S1), das durch einen integrierten Schaltkreis (IC) mit Vorrichtungen (R2, Tm, CD, DIV) zum Modulieren der Last einer Spule (L2) ausgegeben wird, **dadurch gekennzeichnet, dass** die Erfasungsspule (L1) und die Spule (L2) des integrierten Schaltkreises jeweils gebildet werden durch Primärwicklung (T1) und Sekundärwicklung (T2) eines Transformators (TR), wobei die Sekundärwicklung mit den Anschlüssen (41, 42) des integrierten Schaltkreises (IC) verbunden ist.
